# EUROPÄISCHE PATENTANMELDUNG

(11) **EP 1 777 977 A1**
(43) Veröffentlichungstag der Anmeldung: **25.04.2007**
(21) Anmeldenummer: 05022689.3
(22) Anmeldetag: 18.10.2005
(51) Int. Cl.: H04Q 7/36, H04Q 7/38

(54) **Massenhandover in einem Funkkommunikationssystem**

(71) Anmelder: SIEMENS AKTIENGESELLSCHAFT, 80333 München (DE)
(72) Erfinder: Käfer, Gerald, Dr., 81739 München (DE); Luo, Jijun, 80797 München (DE); Mohyeldin, Eiman, Bushra, 81467 München (DE); Niedermeier, Christoph, Dr., 80999 München (DE); Dr. Reiner Schmid, D-80538 München (DE)

(57) **Zusammenfassung**

Die Erfindung betrifft ein Verfahren zum Betreiben eines Funkkommunikationssystems, bei welchem eine netzseitige Funkstation (BS) mit einer Mehrzahl von Teilnehmerstationen (MS-EX 1, MS-EX 2, MS-EX SCOUT) unter Verwendung von ersten Funkressourcen kommuniziert. Die netzseitige Funkstation (BS) fordert eine Teilmenge (MS-EX SCOUT) der Mehrzahl von Teilnehmerstationen (MS-EX 1, MS-EX 2, MS-EX SCOUT) zur Durchführung von Messungen an zweiten Funkressourcen auf, und empfängt der Aufforderung entsprechende Messergebnisse von Teilnehmerstationen (MS-EX SCOUT) der Teilmenge. Erfindungsgemäß fordert die netzseitige Funkstation (BS) die Mehrzahl von Teilnehmerstationen (MS-EX 1, MS-EX 2, MS-EX SCOUT) zu einem Wechsel von den ersten zu den zweiten Funkressourcen auf. Weiterhin betrifft die Erfindung eine netzseitige Funkstation (BS) zur Durchführung des Verfahrens.

## Beschreibung

Die Erfindung betrifft ein Verfahren zum Betreiben eines Funkkommunikationssystems, bei welchem eine netzseitige Funkstation mit einer Mehrzahl von Teilnehmerstationen kommuniziert.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Aufgrund der hohen Lizenzgebühren, welche Betreiber von Funkkommunikationssystemen für die Benutzung von Funkfrequenzen zahlen müssen, handelt es sich bei der verfügbaren Bandbreite um eine knappe Ressource. Bislang werden Teile des Funkspektrums üblicherweise exklusiv an einen einzigen Operator vergeben. Um die Funkressourcen optimal nutzen zu können, ist es möglich, dass sich mehrere Operatoren Frequenzabschnitte teilen. Hat einer der Operatoren die Hoheit über den Frequenzabschnitt, so kann dieser Operator Teilnehmerstationen des anderen Operators zwingen, den Frequenzabschnitt zu verlassen, und diesen somit für seine eigenen Teilnehmerstationen frei zu geben.

Der Erfindung liegt die Aufgabe zugrunde, ein effizientes Verfahren zum Betreiben eines Funkkommunikationssystems aufzuzeigen, welches einen Handover einer Mehrzahl von Teilnehmerstationen ermöglicht. Weiterhin soll eine netzseitige Funkstation zur Durchführung des Verfahrens aufgezeigt werden.

Diese Aufgabe wird durch ein Verfahren mit den Merkmalen des Anspruchs 1 und durch eine Vorrichtung mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Betreiben eines Funkkommunikationssystems kommuniziert eine netzseitige Funkstation mit einer Mehrzahl von Teilnehmerstationen unter Verwendung von ersten Funkressourcen. Die netzseitige Funkstation fordert eine Teilmenge der Mehrzahl von Teilnehmerstationen zur Durchführung von Messungen an zweiten Funkressourcen auf. Sie empfängt daraufhin der Aufforderung entsprechende Messergebnisse von Teilnehmerstationen der Teilmenge. Erfindungsgemäß fordert die netzseitige Funkstation die Mehrzahl von Teilnehmerstationen zu einem Wechsel von den ersten zu den zweiten Funkressourcen auf.

Bei der netzseitigen Funkstation handelt es sich vorzugsweise um eine Funkstation eines zellularen Systems, bei den Teilnehmerstationen kann es sich an sich um beliebig ausgestaltet Endgeräte handeln, welche per Funk mit der netzseitigen Funkstation kommunizieren können. Eine Mehrzahl von Teilnehmerstationen kommuniziert mit der netzseitigen Funkstation auf ersten Funkressourcen, wie z.B. auf einem bestimmten Frequenzband. Hierbei müssen nicht alle Teilnehmerstationen der Mehrzahl die gleichen Funkressourcen der ersten Funkressourcen verwenden, z.B. können diese jeweils eine Untereinheit der ersten Funkressourcen verwenden, wie z.B. eines oder mehrere Subbänder eines Frequenzbandes. Andererseits ist es auch möglich, dass alle Teilnehmerstationen der Mehrzahl die ersten Funkressourcen vollständig verwenden, wobei Signale von/für die Teilnehmerstationen der Mehrzahl voneinander durch ein Vielfachzugriffsverfahren wie z.B. CDMA (Code Division Multiple Access) oder TDMA (Time Division Multiple Access) unterscheidbar sind. Entsprechendes gilt auch für die zweiten Funkressourcen, zu welchen die Teilnehmerstationen der Mehrzahl nach Empfang der Aufforderung durch die netzseitige Funkstation wechseln können. Neben den Teilnehmerstationen der Mehrzahl, welche an dem erfindungsgemäßen Verfahren beteiligt sind, kann die netzseitige Funkstation mit weiteren Teilnehmerstationen auf den ersten Funkressourcen und/oder auf anderen Funkressourcen kommunizieren.

Es werden Teilnehmerstationen der Mehrzahl aufgefordert, Messungen an den zweiten Funkressourcen durchzuführen. Die zweiten Funkressourcen unterscheiden sich hierbei von den ersten, d.h. zum Zeitpunkt des Empfangs der Aufforderung zur Messung und später zum Wechsel verwenden die Teilnehmerstationen der Mehrzahl zur Kommunikation nicht die zweiten Funkressourcen. Bei den zweiten Funkressourcen kann es sich z.B. um ein mit einem die ersten Funkressourcen darstellenden Frequenzband nicht überlappendes Frequenzband handeln. Die Aufforderung zur Vermessung der zweiten Funkressourcen ergeht nicht an alle Teilnehmerstationen der Mehrzahl, sondern lediglich an eine oder manche dieser Teilnehmerstationen.

Die netzseitige Funkstation empfängt Messergebnisse, wobei diese Messergebnisse den zuvor durch die Aufforderung angeforderten entsprechen. Hierbei ist es möglich, dass die netzseitige Funkstation Messergebnisse von einer, von mehreren oder von allen Teilnehmerstationen der Teilmenge empfängt. Bei den empfangenen Messergebnissen kann es sich um Messwerte an sich oder auch um aus den Messwerten ermittelte Größen handeln.

Nach Empfang der Messwerte durch die netzseitige Funkstation ergeht eine Aufforderung an alle Teilnehmerstationen der Mehrzahl, von den ersten zu den zweiten Funkressourcen zu wechseln, d.h. einen Handover durchzuführen. Während somit lediglich eine Teilmenge der Mehrzahl von Teilnehmerstationen Tests in Form von Messungen durchgeführt hat, sollen gemäß der Aufforderung zum Wechsel alle Teilnehmerstationen der Mehrzahl den Wechsel zu den getesteten Funkressourcen durchführen. Eine auf die Aufforderung zum Wechsel erfolgende Durchführung des Handovers kann hierbei auf verschiedene Arten erfolgen.

In Weiterbildung der Erfindung entscheidet die netzseitige Funkstation oder eine andere netzseitige Einrichtung des Funkkommunikationssystems unter Verwendung der Messergebnisse über die Versendung der Aufforderung zum Wechsel der Funkressourcen. Es wird somit vor der Versendung der Aufforderung zum Wechsel entschieden, ob diese Aufforderung zu versenden ist, wobei die Messergebnisse berücksichtigt werden. Hierdurch kann zum Wechsel aufgefordert werden, wenn die Messergebnisse anzeigen, dass ein Wechsel zu den zweiten Funkressourcen vorteilhaft oder zumindest nicht allzu nachteilig ist. Die Entscheidung kann von der netzseitigen Funkstation getroffen werden, welche im Anschluss bei einer positiven Entscheidung die Aufforderung zum Wechsel an die Teilnehmerstationen der Mehrzahl versendet, oder auch von einer anderen Einrichtung, welche die netzseitige Funkstation darüber informiert, dass die Aufforderung zu versenden ist.

Vorteilhaft ist es, wenn die netzseitige Funkstation oder eine andere netzseitige Einrichtung des Funkkommunikationssystems die zweiten Funkressourcen auswählt, und zwar unter Berücksichtigung eines aktuell stattfindenden Funkverkehrs auf den zweiten Funkressourcen. In diesem Fall ist die Funkstation oder die andere netzseitige Einrichtung des Funkkommunikationssystems darüber informiert, welche Funkkommunikationen zumindest unter anderem aktuell auf den zweiten Funkressourcen erfolgen. Hierdurch kann eine günstige Vorauswahl von potentiellen Zielfunkressourcen eines Handovers getroffen werden. Die Auswahl der zweiten Funkressourcen kann von der netzseitigen Funkstation durchgeführt werden, welche im Anschluss die Aufforderung zum Vermessen dieser Funkressourcen an die Teilmenge der Teilnehmerstationen versendet, oder auch von einer anderen Einrichtung, welche die netzseitige Funkstation darüber informiert, welche Funkressourcen zu vermessen sind.

In Ausgestaltung der Erfindung stellt die netzseitige Funkstation oder eine andere netzseitige Einrichtung des Funkkommunikationssystems vor Versendung der Aufforderung zur Durchführung von Messungen fest, dass eine Teilnehmerstation, welche nicht Bestandteil der Mehrzahl von Teilnehmerstationen ist, Funkressourcen der ersten Funkressourcen benötigt. Die Teilnehmerstation, welche nicht Bestandteil der Mehrzahl von Teilnehmerstationen ist, bedarf somit Funkressourcen, welche aktuell von den Teilnehmerstationen der Mehrzahl genutzt werden. Die Information, dass dies zutrifft, kann von der Teilnehmerstation, welche nicht Bestandteil der Mehrzahl von Teilnehmerstationen ist, stammen, oder auch aus dem Netz.

Mit Vorzug handelt es sich bei der Teilnehmerstation, welche nicht Bestandteil der Mehrzahl von Teilnehmerstationen ist, um eine gegenüber den Teilnehmerstationen der Mehrzahl höher priorisierte Teilnehmerstation. Eine höhere Priorisierung resultiert in einer anderen Behandlung, denn die Teilnehmerstationen der Mehrzahl werden aufgrund des Funkressourcenbedarfs der höher priorisierten Teilnehmerstation zum Wechsel ihrer Funkressourcen aufgefordert. Eine höhere Priorisierung kann auf verschiedene Weisen zustande kommen: z.B. dadurch, dass die priorisierte Teilnehmerstation anders vergebührt wird, oder dass sie einen Vertrag mit einem anderen Betreiber aufweist als die Teilnehmerstationen der Mehrzahl.

Der Teilnehmerstation, welche nicht Bestandteil der Mehrzahl von Teilnehmerstationen ist, können vor der Versendung der Aufforderung zum Wechsel Funkressourcen der ersten Funkressourcen zugewiesen werden, und später nach der Versendung der Aufforderung zum Wechsel Funkressourcen der ersten Funkressourcen im größeren Umfang. Somit werden der Teilnehmerstation, welche nicht Bestandteil der Mehrzahl von Teilnehmerstationen ist, übergangsweise Funkressourcen in einem kleineren Maß zugewiesen. Nach einem Wechsel der Teilnehmerstationen der Mehrzahl von den ersten zu den zweiten Funkressourcen stehen Funkressourcen der ersten Funkressourcen im größeren Umfang zur Verfügung, welche dann von der Teilnehmerstation, welche nicht Bestandteil der Mehrzahl von Teilnehmerstationen ist, verwendet werden können. Die Zuweisung von Funkressourcen erfolgt hierbei durch Versendung einer geeigneten Nachricht von der netzseitigen Funkstation zu der Teilnehmerstation, welche nicht Bestandteil der Mehrzahl von Teilnehmerstationen ist.

In Weiterbildung der Erfindung wählt die netzseitige Funkstation oder eine andere netzseitige Einrichtung des Funkkommunikationssystems die Teilnehmerstationen der Teilmenge unter Berücksichtigung von einer oder mehrerer der folgenden Größen aus: zuvor von den Teilnehmerstationen der Teilmenge versendete Informationen, wie z.B. die Bereitschaft, zur Durchführung der Messungen zur Verfügung zu stehen, oder der aktuelle Batteriestand der jeweiligen Teilnehmerstation; geographische Positionen von Teilnehmerstationen, so dass z.B. eine möglichst gleichmäßige Verteilung der Teilnehmerstationen der Teilmenge realisiert werden kann; Fähigkeiten von Teilnehmerstationen zur Verwendung von Funktechnologien, dies ist insbesondere dann relevant, wenn für die zweiten Funkressourcen eine andere Funktechnologie verwendet wird als für die ersten Funkressourcen; Parameter von aktuell von Teilnehmerstationen durchgeführten Kommunikationen, wie z.B. Echtzeitanforderungen. Die Auswahl kann direkt durch die netzseitige Funkstation erfolgen, welche daraufhin die von ihr ausgewählten Teilnehmerstationen informiert, oder alternativ von einer anderen Einrichtung, welche die im Anschluss die netzseitige Funkstation über die getroffene Auswahl informiert.

Bei den zweiten Funkressourcen kann es sich um von der netzseitigen Funkstation zur Kommunikation mit Teilnehmerstationen verwendete Funkressourcen handeln. In diesem Fall kommunizieren die Teilnehmerstationen der Mehrzahl nach der Durchführung eines Handovers von den ersten zu den zweiten Funkressourcen unverändert mit der gleichen netzseitigen Funkstation. Alternativ kann es sich bei den zweiten Funkressourcen um von einer anderen netzseitigen Funkstation zur Kommunikation mit Teilnehmerstationen verwendete Funkressourcen handeln. In diesem Fall führen die Teilnehmerstationen der Mehrzahl ein Handover nicht nur in Bezug auf die Funkressourcen durch, sondern auch in Bezug auf die netzseitige Funkstation, mit welcher sie kommunizieren.

In Ausgestaltung der Erfindung unterscheidet sich die für die ersten Funkressourcen verwendete Funktechnologie von der für die zweiten Funkressourcen verwendete Funktechnologie. In diesem Fall führen die Teilnehmerstationen der Mehrzahl einen Handover nicht nur in Bezug auf die Funkressourcen, sondern auch in Bezug auf die zur Kommunikation verwendete Funktechnologie durch. Beispiele verschiedener Funktechnologien sind: GSM, GPRS, EDGE, welche jeweils TDMA verwenden; UMTS, welches CDMA verwendet; HSDPA, welches TDMA und CDMA verwendet; HiperLAN, IEEE 802.11 oder andere OFDM-Technologien; WiMAX, UMTS 3GPlus.

In Weiterbildung der Erfindung weist die netzseitige Funkstation mindestens einer Teilnehmerstation der Mehrzahl und/oder mindestens einer Teilnehmerstation, welche nicht Bestandteil der Mehrzahl von Teilnehmerstationen ist, vor der Versendung der Aufforderung zum Wechsel Funkressourcen in kleinerem Umfang zu als die ihr aktuell zugewiesenen Funkressourcen. Es erfolgt somit eine Einschränkung hinsichtlich der bereits zugewiesenen Funkressourcen, wodurch Teile dieser Funkressourcen frei werden. Vorzugsweise wird die Einschränkung nach erfolgtem Wechsel der Teilnehmerstationen der Mehrzahl von den ersten zu den zweiten Funkressourcen wieder rückgängig gemacht. Die Zuweisung von Funkressourcen an eine Teilnehmerstation erfolgt durch Versendung einer geeigneten Nachricht von der netzseitigen Funkstation an die jeweilige Teilnehmerstation.

Mit Vorzug wird beim Wechsel der Mehrzahl von Teilnehmerstationen von den ersten zu den zweiten Funkressourcen eine unter Berücksichtigung von Eigenschaften dieser Teilnehmerstationen und/oder von Parametern von Kommunikationen dieser Teilnehmerstationen erstellte Reihenfolge eingehalten. Ein Wechsel erfolgt in diesem Fall nicht für alle Teilnehmerstationen der Mehrzahl gleichzeitig, sondern gemäß einer bestimmten Reihenfolge. Die Reihenfolge kann z.B. berücksichtigen, welche Dienste die Teilnehmerstationen aktuell in Anspruch nehmen.

Die erfindungsgemäße netzseitige Funkstation für ein Funkkommunikationssystem weist Mittel auf zum Kommunizieren mit einer Mehrzahl von Teilnehmerstationen unter Verwendung von ersten Funkressourcen, sowie Mittel zum Auffordern einer Teilmenge der Mehrzahl von Teilnehmerstationen zur Durchführung von Messungen an zweiten Funkressourcen, und Mittel zum Empfangen von der Aufforderung entsprechenden Messergebnissen von Teilnehmerstationen der Teilmenge. Erfindungsgemäß umfasst sie weiterhin Mittel zum Auffordern der Mehrzahl von Teilnehmerstationen zu einem Wechsel von den ersten zu den zweiten Funkressourcen.

Die erfindungsgemäße netzseitige Funkstation eignet sich insbesondere zur Durchführung des erfindungsgemäßen Verfahrens, wobei dies auch auf die Ausgestaltungen und Weiterbildungen zutreffen kann. Hierzu kann sie weitere geeignete Mittel umfassen.

Im folgenden wird die Erfindung anhand eines Ausführungsbeispiels näher erläutert. Dabei zeigen:
- Figur 1:: einen Ausschnitt aus einem Funkkommunikationssystem,
- Figur 2:: eine Aufteilung eines Frequenzbandes.

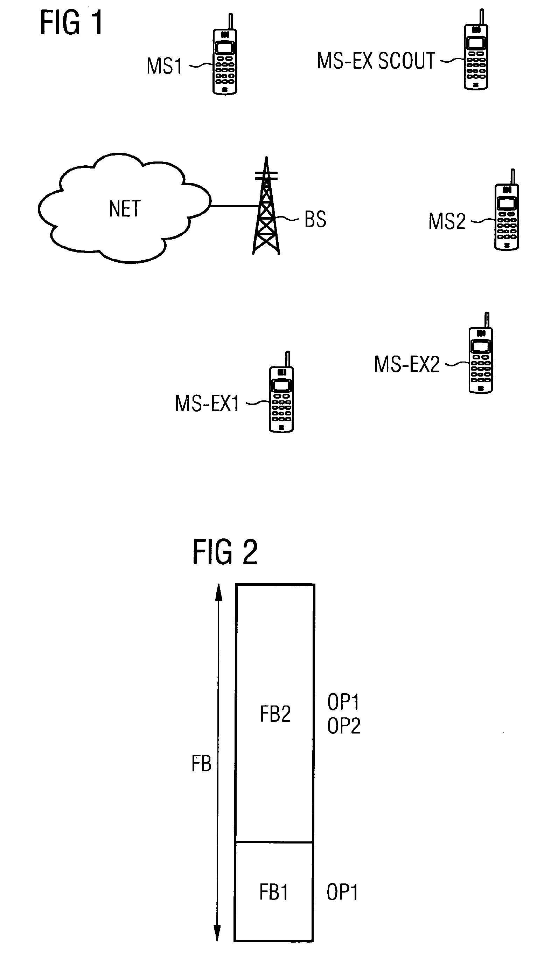

Der in Figur 1 dargestellte Ausschnitt aus einem Funkkommunikationssystem umfasst die Basisstation BS, sowie die Teilnehmerstationen MS 1, MS 2, MS-EX 1, MS-EX 2 und MS-EX SCOUT. Die Basisstation BS, eine netzseitige Funkeinrichtung, ist mit weiteren netzseitigen Einrichtungen NET des Funkkommunikationssystems verbunden. Bei dem betrachteten Funkkommunikationssystem handelt es sich vorzugsweise um ein zellulares System, z.B. gemäß der dritten oder vierten Generation. Weitere netzseitige Funkstationen des Funkkommunikationssystems sind der Übersichtlichkeit halber nicht in Figur 1 dargestellt.

Figur 2 zeigt das zur Kommunikation zwischen der Basisstation BS und den Teilnehmerstationen MS 1, MS 2, MS-EX 1, MS-EX 2 und MS-EX SCOUT verwendete Frequenzband FB. Dieses ist in die zwei Teilbereicht FB1 und FB2 aufgeteilt. Der erste Teilbereich FB1 wird von einem ersten Operator bzw. Betreiber OP1 und der zweite Teilbereich FB2 wird sowohl von dem ersten Operator OP1 als auch von einem zweiten Operator OP2 verwendet. Dass ein Operator einen Teilbereich des Frequenzbandes FB verwendet, bedeutet, dass die Teilnehmerstationen, welche mit dem jeweiligen Operator einen Vertrag abgeschlossen haben, mit der Basisstation BS auf dem Teilbereich kommunizieren dürfen.

Es wird davon ausgegangen, dass die Teilnehmerstationen MS 1 und MS 2 zu dem ersten Operator OP1 gehören, und die Teilnehmerstationen MS-EX 1, MS-EX 2 und MS-EX SCOUT zu dem zweiten Operator OP2. Es existiert gemäß Figur 2 der Teil FB1 des Frequenzbandes FB, welcher von der Basisstation BS exklusiv für Teilnehmerstationen MS 1 und MS 2 des ersten Operators OP1 genutzt wird, und ein Teil FB2, welcher von der Basisstation BS für Teilnehmerstationen MS 1, MS 2, MS-EX 1, MS-EX 2 und MS-EX SCOUT beider Operators OP1 OP2 genutzt wird. Bezogen auf den Teilbereich FB2 wird die Funkressource der Frequenz somit zwischen den Operatoren OP1 und OP2 geteilt (englisch: spectrum sharing).

Während sich gemäß Figur 2 das Teilen des Frequenzspektrums auf den Teilbereich FB2 beschränkt, ist es auch möglich, dass beide Operatoren OP1 und OP2 das gesamte Frequenzband FB gleichzeitig nutzen bzw. teilen. Der Vorteil der Konstellation gemäß Figur 2 für den ersten Operator OP1 ist jedoch, dass er in Bezug auf den Teilbereich FB1 ein effizientes RRM (Radio Ressource Management) Verfahren durchführen kann, ohne durch die für ihn nicht vorhersehbare Belegung von Funkressourcen durch den zweiten Operator OP2 gestört zu werden.

In Figur 1 ist der Fall dargestellt, dass die beiden Operatoren OP1 und OP2 die gleiche Basisstation BS zur Kommunikation mit ihren jeweiligen Teilnehmerstationen verwenden. Die Erfindung ist auch auf den Fall anwendbar, dass eine Basisstation des ersten Operators OP1 und eine Basisstation des zweiten Operators OP2 existieren, welche in überlappenden Funkabdeckungsbereichen den Teilbereich FB2 verwenden.

Der erste Operator OP1 hat das uneingeschränkte Recht zur Nutzung des Frequenzbandes FB, während dem zweiten Operator OP2 das Recht zur Nutzung des Teilbereichs FB2 lediglich von dem ersten Operator OP1 bewilligt wird. Benötigt der erste Operator OP1 Funkressourcen des Teilbereichs FB2, welche aktuell von Teilnehmerstationen des zweiten Operators OP2 belegt sind, so ist es dem ersten Operator OP1 möglich, die Kommunikationen dieser Teilnehmerstationen des zweiten Operators OP2 in dem Teilbereich FB2 zu beenden. Dies kann z.B. dann auftreten, wenn Notrufe von Teilnehmerstationen abgesetzt werden, oder wenn Teilnehmerstationen des ersten Operators über die Funkressourcen des Teilbereichs FB1 und die bereits von dem ersten Operator OP1 belegten Funkressourcen des Teilbereichs FB2 hinaus Funkressourcen anfordern. In diesen Fällen ist es erforderlich, dass die betroffenen Teilnehmerstationen des zweiten Operators OP2 einen Handover, d.h. einen Wechsel zu anderen Funkressourcen, durchführen. Im folgenden wird die Situation betrachtet, dass von einem erforderlichen Handover eine Vielzahl von Teilnehmerstationen betroffen sind (englisch: mass handover).

Alternativ zu dem beschriebenen Fall, dass es sich bei den Teilnehmerstationen, welche die Funkressourcen wechseln müssen, um Teilnehmerstationen eines anderen Operators handelt, ist es auch möglich, dass ein Operator seine Teilnehmerstationen in verschiedene Prioritätsklassen einteilt, wobei Teilnehmerstationen einer niedrigeren Prioritätsklassen ihre Funkressourcen zu Gunsten von Teilnehmerstationen einer höheren Prioritätsklassen verlassen müssen.

Die im folgenden erläuterten Schritte werden vorzugsweise von einer Steuereinrichtung des ersten Operators OP1 kontrolliert. Alternativ ist es jedoch auch möglich, dass der zweite Operator OP2 hierfür teilweise oder vollständig verantwortlich ist.

Die Entscheidung darüber, ob ein Handover nötig ist oder nicht, kann z.B. von den folgenden Größen abhängig gemacht werden:
- die aktuelle Auslastung der Funkressourcen des Frequenzbandes FB,
- die Verteilung und Charakteristik des aktuellen Funkverkehrs auf dem Frequenzband FB, z.B. betreffend die Skalierbarkeit, Unterbrechbarkeit, Echtzeitanforderungen, Speicherbarkeit,
- die Intensität des Funkverkehrs auf dem Frequenzband FB. Zusätzlich oder alternativ können weitere Größen oder Parameter zur Entscheidung über die Notwendigkeit eines Handovers herangezogen werden.

Nachdem entschieden wurde, dass ein Handover für eine Vielzahl von Teilnehmerstationen nötig ist, wird ein Frequenzbereich als mögliches Ziel des Handovers identifiziert. Hierbei kann gegebenenfalls unter Kenntnis der aktuellen Auslastung dieses Kandidaten-Frequenzbereichs berücksichtigt werden, ob die freie Kapazität des Kandidaten-Frequenzbereichs ausreichend ist. Die Funktechnologie, welche auf dem von den Teilnehmerstationen bislang genutzten Frequenzbereich verwendet wird, kann sich von der Funktechnologie, welche auf dem Kandidaten-Frequenzbereich verwendet wird, unterscheiden. In diesem Fall muss es sich bei den Teilnehmerstationen, welche einen Handover zu dem Kandidaten-Frequenzbereich durchführen, um Teilnehmerstationen mit der Fähigkeit zur Verwendung verschiedener Funktechnologien handeln, insbesondere um Teilnehmerstationen, welche gemäß SDR (Software Defined Radio) in der Lage sind, aufgrund des Empfangs von geeigneter Software verschiedene Funktechnologien zu nutzen.

Die von dem durchzuführenden Handover betroffenen Teilnehmerstationen können gegebenenfalls zu diesem frühen Zeitpunkt bereits über den anstehenden Handover informiert werden. Dies ist vorteilhaft, da es möglich ist, dass manche Teilnehmerstationen aufgrund ihrer aktuellen Situation entscheiden könnten, dass anstelle eines Handovers die Kommunikation vollständig beendet werden kann.

Es werden eine oder mehrere Teilnehmerstationen bestimmt, welche wie im folgenden näher erläutert als "Späher" tätig werden. In Figur 2 beispielsweise handelt es sich hierbei um die Teilnehmerstation MS-EX SCOUT. Die Teilnehmerstation MS-EX SCOUT hat die Aufgabe, Messungen an den Funkressourcen des Kandidaten-Frequenzbereichs durchzuführen. Bei den Messgrößen kann es sich z.B. um die so genannte Interference Temperature handeln, einer Größe, welche anzeigt, wie stark eine eigene Funkaktivität eine andere Nutzung des gleichen Frequenzbereichs beeinflusst, oder um die aktuelle Ausnutzung des Kandidaten-Frequenzbereichs. Die Durchführung der Messungen kann den Empfang und gegebenenfalls auch die Versendung von Signalen auf den alternativen Funkressourcen umfassen.

Die Auswahl der "Späher" erfolgt vorzugsweise nicht aus allen aktuell mit der Basisstation BS kommunizierenden Teilnehmerstationen. Vielmehr haben einige Teilnehmerstationen sich zuvor als potentielle "Späher" registriert, indem sie sie beschreibende Größen hinterlegen. Eine derartige Hinterlegung kann einmalig erfolgen, in diesem Fall enthält sie neben Identifikationsinformationen der jeweiligen Teilnehmerstation z.B. die von ihr unterstützte Funktechnologie und/oder Frequenzbereiche. Alternativ oder zusätzlich kann eine Registrierung als potentieller "Späher" auch im Rahmen einer laufenden Kommunikation erfolgen. Im letzteren Fall können die von der jeweiligen Teilnehmerstation zur Registrierung versendeten Informationen z.B. den aktuellen Batteriestand und/oder von der Teilnehmerstation im Rahmen der laufenden Kommunikation genutzte Dienste enthalten.

Eine Teilnehmerstation kann für ihre Registrierung oder Tätigkeit als "Späher" entlohnt werden, indem dies z.B. bei der Vergebührung der jeweiligen Teilnehmerstation berücksichtigt wird. Alternativ zum freiwilligen Zur-Verfügung-Stellen als potentieller "Späher" ist es auch denkbar, dass netzseitig Teilnehmerstationen unabhängig von ihrer Bereitschaft hierzu als "Späher" aus den aktuell netzseitig angemeldeten Teilnehmerstationen ausgesucht werden.

Bei der Auswahl der "Späher" können verschiedene Faktoren berücksichtigt werden, um eine möglichst fundierte Entscheidung darüber treffen zu können, ob der Kandidaten-Frequenzbereich geeignet für einen Handover der Vielzahl von Teilnehmerstationen ist. Die "Späher" können z.B. abhängig von ihrer aktuellen geographischen Position ausgewählt werden. Hierbei sollte berücksichtigt werden, dass diese zur Verbesserung der statistischen Ergebnisse möglichst gleichmäßig verteilt sein sollten. Weiterhin kann berücksichtigt werden, ob sich eine Teilnehmerstation aufgrund ihrer aktuellen Funkverkehrssituation dazu eignet, Messungen an anderen Funkressourcen durchzuführen. Führt eine Teilnehmerstation aktuell z.B. eine Echtzeit-Kommunikation durch und ist sie nicht in der Lage, gleichzeitig hierzu Messungen auf aktuell von ihr nicht zur Kommunikation verwendeten Frequenzen durchzuführen, sollte diese Teilnehmerstation nicht als "Späher" bestimmt werden, um ihre aktuell erfahrene Dienstgüte nicht wesentlich einzuschränken.

Nach der Auswahl der Teilnehmerstation(en), welche als "Späher" fungieren sollen, werden diese über die Basisstation BS hierüber benachrichtigt. Mit der Benachrichtigung wird eine Frist gesetzt, bis zu welcher eine Rückmeldung über die durchgeführten Messungen zu geben ist. Geben die als "Späher" tätigen Teilnehmerstationen oder eine bestimmte Mindestanzahl der als "Späher" tätigen Teilnehmerstationen innerhalb der Frist keine Rückmeldung, so wird entschieden, die Kommunikationen der für den Handover vorgesehenen Teilnehmerstationen abzubrechen (englisch: call drop), ohne ein Handover durchzuführen. Einerseits werden hierdurch zwar Funkressourcen des Frequenzbandes FB frei, andererseits bedeutet dies für die Teilnehmerstationen, welche ihre Kommunikationen beenden müssen, eine deutliche Einschränkung ihrer Dienstgüte.

Erfolgt eine Rückmeldung der Messergebnisse einer ausreichenden Anzahl von "Spähern", so werden die Messergebnisse ausgewertet, um darüber zu entscheiden, ob es sich bei dem Kandidaten-Frequenzbereich um ein geeignetes Ziel eines Handovers der Vielzahl von Teilnehmerstationen handelt. Hierbei können z.B. Schwellenwerte für die einzelnen Messgrößen verwendet werden. Insbesondere sollte durch geeignete Extrapolation berücksichtigt werden, dass die Anzahl der "Späher" geringer ist als die Anzahl der Teilnehmerstationen, welche den Handover durchführen sollen, so dass die von den "Spähern" beobachtete Interferenzsituation nicht der tatsächlichen nach einem Handover der Vielzahl von Teilnehmerstationen entspricht. Wird aufgrund der Messungen der "Späher" entschieden, dass ein Handover zu dem Kandidaten-Frequenzbereich nicht durchgeführt werden soll, gibt es die Möglichkeit, die Kommunikationen der für den Handover vorgesehenen Teilnehmerstationen abzubrechen, ohne einen Handover durchzuführen. Alternativ ist es möglich, einen anderen Kandidaten-Frequenzbereich auszuwählen und erneut Messungen von "Spähern" auf diesen Frequenzen durchführen zu lassen. Eine weitere Möglichkeit ist, abhängig von der Auswertung der Messungen der "Späher" den geplanten Handover lediglich für manche der Teilnehmerstationen durchzuführen.

Liefert die Auswertung der Messungen der "Späher" ein positives Ergebnis bezüglich des Kandidaten-Frequenzbereichs, so werden die Teilnehmerstationen der Vielzahl zum Wechsel der Funkressourcen aufgefordert, woraufhin ein Handover der Vielzahl von Teilnehmerstationen zu dem Kandidaten-Frequenzbereich stattfindet. Bei der Durchführung des Handovers werden vorzugsweise die folgenden Punkte beachtet:
- Teilnehmerstationen, welche aktuell einen Echtzeit-Dienst in Anspruch nehmen, wechseln zuerst in den Kandidaten-Frequenzbereich.
- Teilnehmerstationen mit keiner Echtzeitanforderung können ihre Kommunikation auf dem aktuell genutzten Frequenzbereich einschränken, indem sie z.B. in den "sleep mode" oder "Active Hold mode" oder "dormant mode" wechseln oder ihre Datenrate reduzieren. Ein Wechsel dieser Teilnehmerstationen kann dann zu einem späteren Zeitpunkt oder auch gar nicht erfolgen.
- Berücksichtigung der Fähigkeiten der Teilnehmerstationen, z.B. hinsichtlich des verwendbaren Frequenzbereichs, ihrer Duplex-Fähigkeit, der von ihnen verwendbaren Funktechnologie, ihrer Fähigkeit zum Software-Download. Ist eine Teilnehmerstation beispielsweise aufgrund ihrer Fähigkeiten nicht für die Kommunikation auf dem neuen Frequenzbereich geeignet, so kann auf die Durchführung eines Handovers in Bezug auf diese Teilnehmerstation verzichtet werden. Muss die zur Kommunikation auf dem neuen Frequenzbereich erforderliche Software erst heruntergeladen werden, kann mit dem Handover in Bezug auf die jeweilige Teilnehmerstation gewartet werden, bis die Installation der Software abgeschlossen ist.

Werden Funkressourcen des von den Teilnehmerstationen, welche einen Handover durchführen, vor dem Handover verwendeten Frequenzbereichs zu einem späteren Zeitpunkt wieder frei, so ist es möglich, dass diesen Teilnehmerstationen ein erneuter Handover angeboten wird, so dass diese wieder ihre früheren Funkressourcen verwenden können.

Von dem Zeitpunkt der Feststellung des Operators OP1, dass er Funkressourcen des Teilbereichs FB benötigt, welche aktuell von dem zweiten Operator OP2 belegt sind, so dass ein Handover von Teilnehmerstationen des zweiten Operators OP2 nötig ist, bis hin zu dem Zeitpunkt, zu welchem diese Funkressourcen durch die Durchführung eines Handovers zur Verfügung stehen, vergeht eine bestimmte Zeitspanne, während welcher die "Späher" ausgewählt werden, ihre Messungen durchführen, die Messungen reportet und ausgewertet werden. Es ist möglich, dass diese Zeitspanne zu lange ist, da eine Teilnehmerstation augenblicklich Funkressourcen benötigt. Hierbei kann es sich z.B. um Teilnehmerstationen des ersten Betreibers OP1 handeln, welchen eine hohe Priorität zugeordnet ist.

Um eine möglichst rasche Zuweisung von Funkressourcen an eine Teilnehmerstation zu ermöglichen, kann folgendermaßen vorgegangen werden: Teilnehmerstationen, welche aktuell auf dem Teilbereich FB1 oder FB2 kommunizieren, erfahren eine Beschränkung hinsichtlich ihrer zugewiesenen Bandbreite, z.B. indem sie in den "sleep mode" oder "idle mode" wechseln. Dies kann sowohl Teilnehmerstationen des ersten Operators OP1 als auch des zweiten Operators OP2 betreffen. Die hierdurch frei gewordenen Funkressourcen können der neu hinzugekommenen Funkressourcen benötigenden Teilnehmerstation zugewiesen werden. Nachdem der Handover der Teilnehmerstationen des zweiten Operators OP2 abgeschlossen ist, stehen ausreichend Funkressourcen zur Verfügung, so dass die Teilnehmerstationen, welche ihren Betriebsmodus gewechselt haben, wieder zurück wechseln können.

Ähnlich kann auch vorgegangen werden, wenn innerhalb des Frequenzbandes FB unterschiedliche Bereiche existieren, welche unterschiedlichen Funktechnologien zugeordnet sind. Benötigt eine Teilnehmerstation einen bestimmten Umfang an Funkressourcen einer der Funktechnologien, so können für die Zeitspanne, bevor diese Funkressourcen durch Durchführung eines Handovers frei gemacht werden, der die Funkressourcen benötigenden Teilnehmerstation kleinere Umfänge an Funkressourcen der verschiedenen Funktechnologien zur Verfügung gestellt werden. Diese kleineren Umfänge können in Summe dem angeforderten Umfang entsprechen oder ihn unterschreiten. Übergangsweise werden der Teilnehmerstation somit nicht ausschließlich Funkressourcen der von ihr bevorzugten Funktechnologie zugewiesen, sondern auch einer anderen Funktechnologie. Nach der Durchführung des Handovers stehen der Teilnehmerstation dann Funkressourcen des gewünschten Umfangs und der gewünschten Funktechnologie zur Verfügung. Durch diese Anwendung des "water filling" Prinzips ist es möglich, eine größere Anzahl an Teilnehmerstationen zuzulassen, womit die knappen Funkressourcen effizient genutzt werden.

Gemäß der Erfindung müssen eine Vielzahl von Teilnehmerstationen von ihnen verwendete Funkressourcen verlassen. Es findet eine Vermessung von alternativ zur verlassenden Funkressourcen zu verwendenden Funkressourcen durch lediglich eine kleinere Anzahl von Teilnehmerstationen statt. Diese kleinere Anzahl von Teilnehmerstationen ist vorzugsweise eine Teilmenge der Teilnehmerstationen, welche ihre Funkressourcen verlassen sollen. Alternativ ist es jedoch auch möglich, dass die kleinere Anzahl zumindest teilweise nicht Bestandteil der Vielzahl von Teilnehmerstationen ist. Es wäre ungünstig, wenn jede der für den Funkressourcenwechsel vorgesehenen Teilnehmerstationen Messungen an den alternativen Funkressourcen durchführen würde. Denn diese Messungen beinhalten oftmals Nachrichtenversendungen durch die messende Teilnehmerstation, so dass es bei dem gleichzeitigen Versuch aller Teilnehmerstationen, die alternativen Funkressourcen zu testen, zu einer Systemüberlastung kommen kann. Weiterhin ist es möglich, dass die Durchführung der Messungen für die jeweilige Teilnehmerstation nachteilig z.B. hinsichtlich der Batterieerschöpfung oder des Fortlaufens der aktuell durchgeführten Kommunikation ist.

Durch das Austesten der alternativen Funkressourcen durch lediglich wenige Teilnehmerstationen wird eine Vielzahl von gescheiterten Handover-Versuchen vermieden. Da ein gescheiterter Handover-Versuch unter Umständen zu einem Kommunikationsabbruch führen kann, wird die von den Teilnehmerstationen erfahrene Qualität gesteigert. Weiterhin geht jeder Kommunikationsabbruch i.d.R. einher mit einer gesteigerten Signalisierungslast, so dass durch eine Vielzahl von Kommunikationsabbrüchen der Durchsatz an Nutzdaten verringert würde.

Für die Teilnehmerstationen des ersten Operators OP1 hat das erläuterte Vorgehen den Vorteil, dass ihnen Funkressourcen bei Bedarf zur Verfügung stehen, da die Teilnehmerstationen des zweiten Operators OP2 diese durch einen Handover zur Verfügung stellen müssen. Für die Teilnehmerstationen des zweiten Operators OP2 hingegen hat das erläuterter Vorgehen den Vorteil, dass sie die Funkressourcen des ersten Operators OP1 nutzen können, solange diese nicht von den Teilnehmerstationen des ersten Operators OP1 benötigt werden. Werden sie benötigt, wird durch ein effizientes Austesten von alternativen Funkressourcen ein rascher Handover einer Vielzahl von Teilnehmerstationen ermöglicht, wobei Kommunikationsabbrüche weitestgehend vermieden werden.

## Patentansprüche

1. Verfahren zum Betreiben eines Funkkommunikationssystems, bei welchem eine netzseitige Funkstation (BS) mit einer Mehrzahl von Teilnehmerstationen (MS-EX 1, MS-EX 2, MS-EX SCOUT) unter Verwendung von ersten Funkressourcen kommuniziert,
eine Teilmenge (MS-EX SCOUT) der Mehrzahl von Teilnehmerstationen (MS-EX 1, MS-EX 2, MS-EX SCOUT) zur Durchführung von Messungen an zweiten Funkressourcen auffordert, und
der Aufforderung entsprechende Messergebnisse von Teilnehmerstationen (MS-EX SCOUT) der Teilmenge empfängt,
**dadurch gekennzeichnet,**
**dass** die netzseitige Funkstation (BS) die Mehrzahl von Teilnehmerstationen (MS-EX 1, MS-EX 2, MS-EX SCOUT) zu einem Wechsel von den ersten zu den zweiten Funkressourcen auffordert.

2. Verfahren nach Anspruch 1, bei dem
es sich bei den ersten Funkressourcen um ein erstes Frequenzband und bei den zweiten Funkressourcen um ein zweites Frequenzband handelt.

3. Verfahren nach Anspruch 1 oder 2, bei dem
die netzseitige Funkstation (BS) oder eine andere netzseitige Einrichtung des Funkkommunikationssystems unter Verwendung der Messergebnisse über die Versendung der Aufforderung zum Wechsel der Funkressourcen entscheidet.

4. Verfahren nach einem der Ansprüche 1 bis 3, bei dem
die netzseitige Funkstation (BS) oder eine andere netzseitige Einrichtung des Funkkommunikationssystems die zweiten Funkressourcen auswählt unter Berücksichtigung eines aktuell stattfindenden Funkverkehrs auf den zweiten Funkressourcen.

5. Verfahren nach einem der Ansprüche 1 bis 4, bei dem
die netzseitige Funkstation (BS) oder eine andere netzseitige Einrichtung des Funkkommunikationssystems vor Versendung der Aufforderung zur Durchführung von Messungen feststellt, dass eine Teilnehmerstation (MS 1, MS 2), welche nicht Bestandteil der Mehrzahl von Teilnehmerstationen (MS-EX 1, MS-EX 2, MS-EX SCOUT) ist, Funkressourcen der ersten Funkressourcen benötigt.

6. Verfahren nach Anspruch 5, bei dem
es sich bei der Teilnehmerstation (MS 1, MS 2), welche nicht Bestandteil der Mehrzahl von Teilnehmerstationen (MS-EX 1, MS-EX 2, MS-EX SCOUT) ist, um eine gegenüber den Teilnehmerstationen (MS-EX 1, MS-EX 2, MS-EX SCOUT) der Mehrzahl höher priorisierte Teilnehmerstation handelt.

7. Verfahren nach Anspruch 5 oder 6, bei dem
der Teilnehmerstation (MS 1, MS 2), welche nicht Bestandteil der Mehrzahl von Teilnehmerstationen (MS-EX 1, MS-EX 2, MS-EX SCOUT) ist, vor der Versendung der Aufforderung zum Wechsel Funkressourcen der ersten Funkressourcen zugewiesen werden und später nach der Versendung der Aufforderung zum Wechsel Funkressourcen der ersten Funkressourcen im größeren Umfang zugewiesen werden.

8. Verfahren nach einem der Ansprüche 1 bis 7, bei dem
die netzseitige Funkstation (BS) oder eine andere netzseitige Einrichtung des Funkkommunikationssystems die Teilnehmerstationen (MS-EX SCOUT) der Teilmenge auswählt unter Berücksichtigung von
• zuvor von den Teilnehmerstationen (MS-EX SCOUT) der Teilmenge versendeten Informationen, und/oder
• geographischen Positionen von Teilnehmerstationen (MS-EX 1, MS-EX 2, MS-EX SCOUT), und/oder
• Fähigkeiten von Teilnehmerstationen (MS-EX 1, MS-EX 2, MS-EX SCOUT) zur Verwendung von Funktechnologien, und/oder
• Parametern von aktuell von Teilnehmerstationen (MS-EX 1, MS-EX 2, MS-EX SCOUT) durchgeführten Kommunikationen.

9. Verfahren nach einem der Ansprüche 1 bis 8,
bei dem es sich bei den zweiten Funkressourcen um von der netzseitigen Funkstation (BS) zur Kommunikation mit Teilnehmerstationen (MS-EX 1, MS-EX 2, MS-EX SCOUT, MS 1, MS 2) verwendete Funkressourcen handelt, oder
bei dem es sich bei den zweiten Funkressourcen um von einer anderen netzseitigen Funkstation zur Kommunikation mit Teilnehmerstationen (MS-EX 1, MS-EX 2, MS-EX SCOUT, MS 1, MS 2) verwendete Funkressourcen handelt.

10. Verfahren nach einem der Ansprüche 1 bis 9, bei dem
die für die ersten Funkressourcen verwendete Funktechnologie sich von der für die zweiten Funkressourcen verwendete Funktechnologie unterscheidet.

11. Verfahren nach einem der Ansprüche 1 bis 10, bei dem
die netzseitige Funkstation (BS) mindestens einer Teilnehmerstation (MS-EX 1, MS-EX 2, MS-EX SCOUT) der Mehrzahl von Teilnehmerstationen und/oder mindestens einer Teilnehmerstation (MS 1, MS 2), welche nicht Bestandteil der Mehrzahl von Teilnehmerstationen (MS-EX 1, MS-EX 2, MS-EX SCOUT) ist, vor der Versendung der Aufforderung zum Wechsel Funkressourcen in kleinerem Umfang zuweist als die der mindestens einen Teilnehmerstation (MS-EX 1, MS-EX 2, MS-EX SCOUT, MS 1, MS 2) aktuell zugewiesenen Funkressourcen.

12. Verfahren nach einem der Ansprüche 1 bis 11, bei dem
beim Wechsel der Mehrzahl von Teilnehmerstationen (MS-EX 1, MS-EX 2, MS-EX SCOUT) von den ersten zu den zweiten Funkressourcen eine unter Berücksichtigung von Eigenschaften dieser Teilnehmerstationen (MS-EX 1, MS-EX 2, MS-EX SCOUT) und/oder von Parametern von Kommunikationen dieser Teilnehmerstationen (MS-EX 1, MS-EX 2, MS-EX SCOUT) erstellte Reihenfolge eingehalten wird.

13. Netzseitige Funkstation (BS) für ein Funkkommunikationssystem, mit
Mitteln zum Kommunizieren mit einer Mehrzahl von Teilnehmerstationen (MS-EX 1, MS-EX 2, MS-EX SCOUT) unter Verwendung von ersten Funkressourcen,
Mitteln zum Auffordern einer Teilmenge (MS-EX SCOUT) der Mehrzahl von Teilnehmerstationen (MS-EX 1, MS-EX 2, MS-EX SCOUT) zur Durchführung von Messungen an zweiten Funkressourcen,
Mitteln zum Empfangen von der Aufforderung entsprechenden Messergebnissen von Teilnehmerstationen (MS-EX SCOUT) der Teilmenge,
**gekennzeichnet durch**
Mittel zum Auffordern der Mehrzahl von Teilnehmerstationen (MS-EX 1, MS-EX 2, MS-EX SCOUT) zu einem Wechsel von den ersten zu den zweiten Funkressourcen.
